# EUROPÄISCHE PATENTSCHRIFT

(11) **EP 3 312 033 B1**
(45) Veröffentlichungstag und Bekanntmachung des Hinweises auf die Patenterteilung: **29.07.2020**
(21) Anmeldenummer: 16195040.7
(22) Anmeldetag: 21.10.2016
(51) Int. Cl.: B60J 5/04, B60J 5/10, B60R 13/02

(54) **FAHRZEUGTÜR**
VEHICLE DOOR
PORTE DU VÉHICULE

(43) Veröffentlichungstag der Anmeldung: 25.04.2018
(73) Patentinhaber: Magna Steyr Fahrzeugtechnik AG & Co KG, 8041 Graz (AT)
(72) Erfinder: HOFER, Bernhard, 8053 Graz (AT); TRUMMER, Peter, 8010 Graz (AT)
(74) Vertreter: Zangger, Bernd

(56) Entgegenhaltungen:
- EP-A2- 0 739 769
- WO-A2-2015/015930
- DE-A1- 4 432 381
- DE-A1-102007 032 143
- US-A- 5 536 060
- US-A1- 2005 150 166
- US-A1- 2016 229 464

## Beschreibung

### Gebiet der Erfindung

Die vorliegende Erfindung betrifft eine Fahrzeugtür für ein Kraftfahrzeug, umfassend eine Tragstruktur, eine Innenschale und eine Außenbeplankung.

### Stand der Technik

Ein Aufbau von Fahrzeugtüren mittels Beplankungsteilen, insbesondere einer Innenbeplankung, auch Innenschale genannt, und einer Außenbeplankung, wobei die Beplankungsteile an einer Tragstruktur lösbar oder nicht lösbar befestigt sind, ist an sich bekannt.

Beispielsweise offenbart die DE 102 55 985 A1 eine Vorrichtung zum Verbinden der Außenbeplankung mit der Tragstruktur einer Fahrzeugtür, mit einem unlösbar mit der Außenbeplankung und lösbar mit der Tragstruktur verbundenem Trägerelement.

Die EP 3 000 637 A1 offenbart eine Fahrzeugtür für ein Kraftfahrzeug, umfassend zumindest einen thermogeformten Beplankungsteil und eine Tragstruktur als Träger für das Beplankungsteil, wobei am Beplankungsteil ein Halter befestigt ist, wobei der Halter in eine Ausformung der Tragstruktur oder in ein an der Tragstruktur befestigtes Tragelement eingreift, so dass das Beplankungsteil an der Ausformung bzw. dem Tragelement in einer Richtung normal zur Eingriffsrichtung gleiten kann.

Eine Fahrzeugtür mit einer äußeren und einer inneren Türplatte, wobei an der inneren Türplatte ein Innenverkleidungsmodul befestigt ist, ist aus der EP 2 006 134 A1 bekannt.

Die US 5 536 060 A offenbart eine Tür für Fahrzeuge, umfassend äußere Paneele und innere Paneele, die verbunden sind, um eine zusammengesetzte Tür zu bilden, die einen zentralen Raum zwischen den Paneelen zur Aufnahme einer Fensterscheibe definiert, wobei das äußere Paneel eine äußere Platte und eine Verstärkungsplatte aufweist und das innere Paneel eine innere Platte aufweist.

Die US 2005/150166 A1 lehrt eine bewegliche Fensteranordnung für eine Fahrzeugtür, wobei die Fahrzeugtür ein Innenpaneel mit einer Innenfläche und einer Außenfläche, ein Außenpaneel, das an der Außenfläche des Innenpaneels befestigt ist, und einen an der Innenfläche des Innenpaneels befestigten Rahmen beinhaltet, wobei die bewegliche Fensteranordnung umfasst: eine Dichtung, die eine obere und eine erste und eine zweite Seite beinhaltet, die sich dazwischen erstrecken; ein Glasfenster, das mit der Dichtung gekoppelt und so strukturiert ist, dass es in Bezug auf diese gleitet; und einen länglichen Hardwareträger, der dem Innenpaneel der Tür zugewandt ist, der konfiguriert ist, um Türbeschläge aufzunehmen, wobei der Hardwareträger an der Dichtung und dem Fenster befestigt ist; wobei die Dichtung, das Fenster und der längliche Hardwareträger eine integrale Baugruppe bilden, die auf der Innenfläche der Innenplatte und dem Rahmen der Fahrzeugtür montiert ist.

Die DE 44 32 381 A1 offenbart eine Verkehrsmitteltüre, deren Türkörper einen aus einem im Wesentlichen U-förmigen, an seiner offenen Seite durch einen Längsträger geschlossenen Rahmenteil aus einem einteiligen oder gebauten Hohl- oder Kastenprofil gebildeten, tragenden Rahmen, an den auch die Ausstattungsteile der Türe, wie Fensterheber samt Fensterführung oder Türbeschläge und dergl. anschließbar sind, und eine die Türaußenhaut bildende Formschale sowie eine die Türinnenverkleidung bildende oder tragende Türinnenschale umfaßt, welche an den Türrahmen angeschlossen sind, und die in der Schließlage vermittels einer türseitig angeordneten Dichtung gegen die Türöffnung der Fahrzeugkarosserie abgedichtet ist, wobei die Türinnenschale durch eine Schale aus einem Kunststoffmaterial gebildet und mindestens entlang ihrer seitlichen und unteren Umfangsränder eine der Türfalzausbildung im Türausschnitt der Fahrzeugkarosserie entsprechende Querschnittsform aufweist, wobei die türseitig angeordnete Türdichtung in einer der Falzstufen der Querschnittsform der Randbereiche der Türinnenschale angeordnet ist.

Die bekannten Beplankungsteile werden üblicherweise an einem tragenden Rahmen befestigt, der die Steifigkeit des Kraftfahrzeuges im Bereich der Fahrzeugtür gewährleisten muss. Die Beplankungsteile, vor allem das Innenbeplankungsteil mit dessen Einbauten, beeinflussen diese Steifigkeit üblicherweise negativ, da deren befestigte Masse durch den Tragrahmen noch mitgetragen werden muss.

### Zusammenfassung der Erfindung

Es ist eine Aufgabe der Erfindung, eine Fahrzeugtür für ein Kraftfahrzeug anzugeben, die einfach und kostengünstig herstellbar ist und dabei eine hohe Steifigkeit bei geringem Gewicht gewährleistet.

Die Lösung der Aufgabe erfolgt durch eine Fahrzeugtür für ein Kraftfahrzeug mit den Merkmalen gemäß Anspruch 1.

Die Fahrzeugtür umfasst eine Tragstruktur, wobei die Tragstruktur einen Teil einer Space-Frame-Struktur der Fahrzeugtüre bildet, eine Innenschale und eine Außenbeplankung, wobei die Innenschale an der Tragstruktur befestigt ist und die Außenbeplankung an der Innenschale befestigt ist, wobei die Innenschale derart ausgebildet und mit der Tragstruktur verbunden ist, dass sie ein die Steifigkeit der Fahrzeugtüre erhöhendes, tragendes Bauteil ist.

Erfindungsgemäß ist die Innenschale der Fahrzeugtür nicht bloß in eine Tragstruktur eingehängt oder geclipst, wie dies für Kunstsoff-Beplankungen üblich ist, oder einfach verschraubt, wie dies für Metall-Beplankungen zur Befestigung an der Tragstruktur gemacht wird, sondern weist einerseits die Innenbeplankung eine derartige Steifigkeit und Größe auf und andererseits eine derartig sichere Befestigung an der Tragstruktur, das die Innenschale die Tragstruktur nicht nur nicht belastet, sondern die Steifigkeit der Fahrzeugtüre erhöht.

Hierdurch kann die Tragstruktur selbst geringer dimensioniert werden und die tragende Innenschale mit weiteren Funktionen ausgestattet werden, so dass eine insgesamt kostengünstige Bauweise ermöglicht wird.

Die Tragstruktur ist erfindungsgemäß Teil einer sogenannten Space-Frame- Struktur.

Bevorzugt ist auch die Außenbeplankung als tragendes Bauteil ausgebildet, dass, zusätzlich zur Innenschale, die Steifigkeit der Fahrzeugtüre weiter erhöht.

Erfindungsgemäß ist die Innenschale ein Kunststoffbauteil, bevorzugt ein thermogeformtes Kunststoffbauteil. Hierdurch wird ein geringes Gewicht der Fahrzeugtür ermöglicht. Die Werkzeugkosten zur Herstellung der Beplankung sind gering. Insbesondere bei Verwendung von thermogeformten thermoplastischen Kunststofffolien kann die Innenschale auch optischen Ansprüchen an eine von innen im Fahrzeug sichtbare Innenbeplankung erfüllen.

Die Innenschale bildet erfindungsgemäß die von innen sichtbare Oberfläche der Fahrzeugtür aus. Sie kann insbesondere bereits eine gewünschte Farbe und/oder Narbung aufweisen und als eingefärbte thermogeformte thermoplastische Kunststofffolie ausgebildet sein.

Alternativ können für die Innenschale auch gespritzte Bauteile oder gepresste, zum Beispiel ein Spritzgussbauteil oder ein Pressteil, sowie auch faserverstärkte Bauteile verwendet werden.

Erfindungsgemäß erstreckt sich die Innenschale im Wesentlichen über die gesamte Höhe und die gesamte Breite der Fahrzeugtür.

Die Fahrzeugtür kann eine seitliche Tür eines Fahrzeuges sein, insbesondere aber auch eine Hecktür eines Fahrzeuges.

Vorzugsweise ist die Innenschale an der Tragstruktur durch Kleben mittels eines elastischen Klebstoffes befestig. Besonders bevorzugt liegt die Schichtdicke des Klebstoffes zwischen 2 mm und 5 mm, so dass beispielsweise unterschiedliche Wärmeausdehnungen im Vergleich zur Tragstruktur ausgeglichen werden können.

Die Innenschale kann insbesondere die Innenausstattung der Fahrzeugtür ausbilden, was die Möglichkeit umschließt dass zumindest Teile der Innenausstattung durch die Innenschale selbst ausgebildet sind.

Vorzugsweise ist die Außenbeplankung ein Metallbauteil. Hierdurch lässt sich ein gewohntes, gutes Fugenbild an einer Außenbeplankung umsetzen, da ein Metallteil eine geringere Wärmeausdehnung gegenüber Kunststoffteilen aufweist.

Nur die Außenschale muss dann einen Lackierprozess durchlaufen. Der Space-Frame, also die Tragstruktur, wird vorzugsweise KTL-beschichtet (kathodische Tauchlackierung) um eine sichere Klebeverbindung zu gewährleisten und Korrosion zu verhindern.

Aufgrund der metallischen Außenschale bleibt trotz alternativer Bauweise der optische und haptische Eindruck einer konventionellen Beplankung erhalten.

Zwischen Innenschale und Tragstruktur können zumindest bereichsweise ein oder auch mehrere Verstärkungselemente angeordnet sein. Die Oberflächen solcher Verstärkungselemente verlaufen bevorzugt nicht parallel zur Oberfläche der Innenschale, bilden also nicht einfach zusätzliche Schichten der Beplankung aus, sondern eine eigene Struktur. Auch die Montage der Verstärkungen kann tragend mittels Klebeverbindungen zur Tragstruktur und zur Innenschale erfolgen.

An der dem Fahrzeuginneren zugewandten Fläche der Innenschale ist vorzugsweise eine öffenbare oder lösbare Blende angebracht, um einen Zugang zu einem Montageraum freizugeben. Der Montageraum kann insbesondere im Hohlraum zwischen der Innenschale und der Außenbeplankung liegen. Durch die Blende wird ein einfacher Zugang zu im Montageraum verbauten Bauteilen wie zum Beispiel einem Schloss, Kabelstrang oder Wischermotor ermöglicht. Die Blende kann demontierbar mittels Klettverbindungen, wie zum Beispiel dual-lock Klettverbindungen, oder mittels Clipsverbindungen angebracht sein.

Erfindungsgemäß ist die Außenbeplankung mit der Innenschale im Bereich ihrer jeweiligen äußeren Ränder miteinander verbunden, nämlich rundum verklebt, sodass keine separate Abdichtung, wie eine übliche PVC-Nahtabdichtung, erforderlich ist.

Besonders bevorzugt ist die Außenbeplankung im Bereich ihres äußeren Randes rundum gebördelt, wobei die Bördelung vorzugsweise durch das Verkleben der Außenbeplankung mit der Innenschale abgedichtet wird.

Eine feststehende Scheibe kann als Sichtfenster auf die Außenbeplankung geklebt sein.

### Kurzbeschreibung der Zeichnungen

Die Erfindung wird im Folgenden beispielhaft unter Bezugnahme auf die Zeichnungen beschrieben.
- Fig. 1: ist eine dreidimensionale Explosionsdarstellung, welche Komponenten einer erfindungsgemäßen Fahrzeugtür zeigt.
- Fig. 2a: ist eine Ansicht einer erfindungsgemäßen Fahrzeugtür in Fahrtrichtung eines Kraftfahrzeugs von hinten und zeigt die Position des Schnittes A-A.
- Fig. 2b: ist eine Schnittansicht einer erfindungsgemäßen Fahrzeugtür gemäß A-A in Fig. 2a.
- Fig. 3a: ist eine Ansicht einer Fahrzeugtür entsprechend Fig. 2a und zeigt die Position des Schnittes B-B.
- Fig. 3b: ist eine Schnittansicht einer erfindungsgemäßen Fahrzeugtür gemäß B-B in Fig. 3a.

### Detaillierte Beschreibung der Erfindung

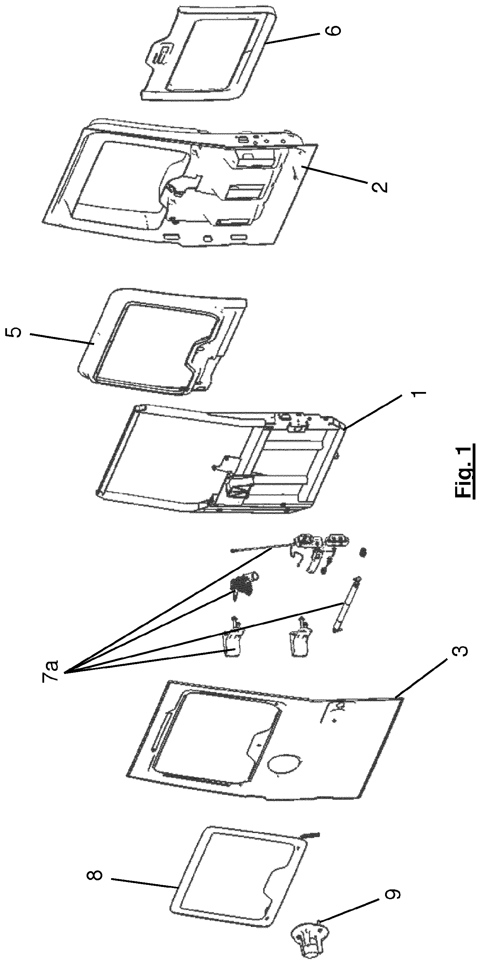

In Fig. 1 ist eine Explosionsdarstellung dargestellt, die Komponenten einer erfindungsgemäßen Fahrzeugtür zeigt.

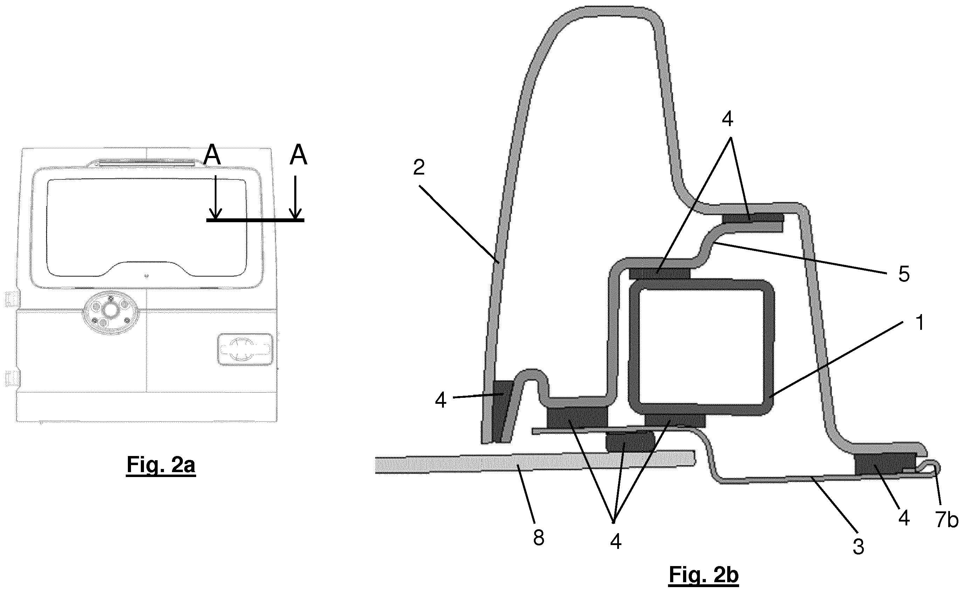

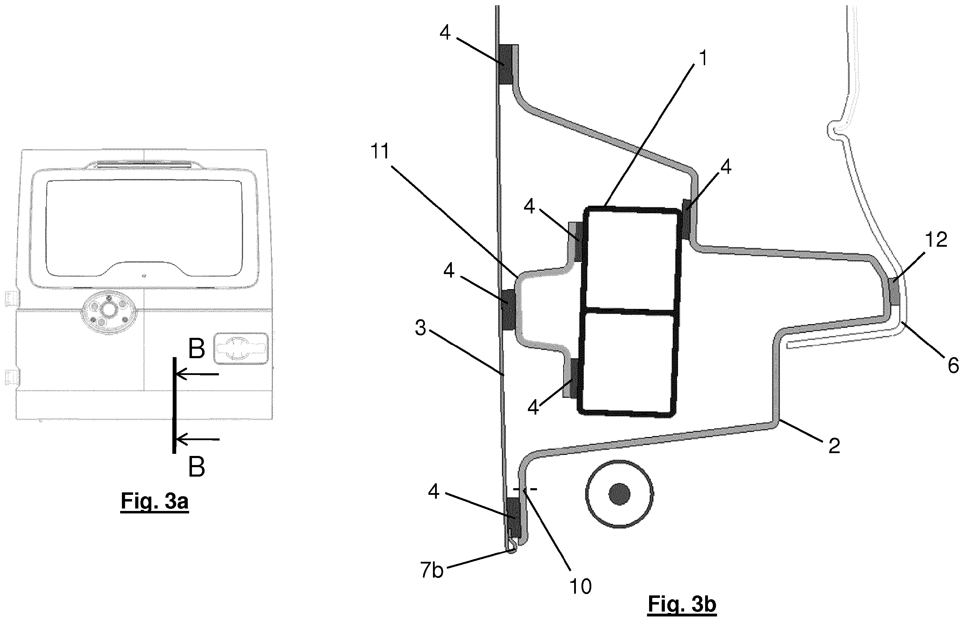

Die Fahrzeugtür umfasst eine Tragstruktur 1, die einen Teil einer Space-Frame-Struktur einer Fahrzeugtüre bildet, eine Innenschale 2 und eine Außenbeplankung 3. Die Tragstruktur, die Innenschale und die Außenbeplankung sind etwa gleich groß - wobei die Innenschale und die Außenbeplankung die Tragstruktur etwas überragen - und haben eine ähnliche, im Wesentlichen rechteckige Geometrie, wobei jeweils über die halbe Höhe in der oberen Hälfte der Rechtecke eine Öffnung für eine Fensterscheibe freigelassen ist. Die Innenschale 2 ist an der Tragstruktur 1 mittels mehrerer flächiger Klebeverbindungen befestigt. Die Außenbeplankung 3 ist großteils an der Innenschale 2, ebenfalls mittels großflächiger Klebungen, befestigt und zusätzlich bereichsweise auch direkt an der Tragstruktur geklebt - wie in den Fig. 2b und 3b im Detail dargestellt.

Die Innenschale 2, sowie auch die Außenbeplankung 3, stellen durch diese Ausformung und ausreichend feste Verklebung mit der Tragstruktur 1 tragende Bauteile dar, die die Steifigkeit der Fahrzeugtür erhöhen.

Die Innenschale 2 ist ein gefärbtes, thermogeformtes thermoplastisches Kunststoffbauteil.

Die Innenschale 2 erstreckt sich im Wesentlichen über die gesamte Höhe und die gesamte Breite eines Türflügels einer Fahrzeugtür.

Die Innenschale 2 ist so geformt, dass sie gleichzeitig die Innenausstattung der Fahrzeugtür ausbildet.

Die Innenschale 2 bildet auch die von innen sichtbare, farbige Oberfläche der Fahrzeugtür aus.

Zwischen der Innenschale 2 und der Tragstruktur 1 kann bereichsweise ein Verstärkungselement 5 angeordnet sein, dass im Wesentlichen eine rechteckige Rahmenform aufweist die um dieselbe Scheibenöffnung herum angeordnet ist, die auch die Beplankungsteile aufweisen. Das Verstärkungselement 5 ist nicht parallel zur Oberfläche der Innenschale 2 geformt, und bildet daher keine weitere Lage der Innenschale 2 aus, sondern weist eine eigene dreidimensionale Struktur auf, die Abstützungen zwischen der Tragstruktur 1 und den Beplankungsteilen 2, 3 ausbildet - wie in Fig. 3a und 3b dargestellt.

An der dem Fahrzeuginneren zugewandten Fläche der Innenschale 2 ist eine Blende 6 befestigbar, wobei durch die Blende 6 ein Zugang zu einem Montageraum zwischen Innenschale 2 und Außenbeplankungsteil 3 freigegeben wird.

Zwischen Außenbeplankung 3 und Innenschale 2 können Montageteile 7a bei geöffneter Blende 6 einfach montiert, gewartet und ersetzt werden.

Die Außenbeplankung 3 ist als Metallbauteil ausgeführt, wobei das Metallbauteil umfänglich mit der Innenschale verklebt wird. Hierdurch können die bei konventionellen Türstrukturen üblichen geringen Fugenbreiten an der Außenbeplankung 3 erreicht werden.

Eine Scheibe 8 kann am Rahmen der Fensteröffnung des Außenbeplankungsteils 3, insbesondere durch Verkleben, befestigt werden.

Ferner kann ein Reserveradträger 9 an der Außenseite der Tragstruktur 1 montiert werden.

Fig. 2a zeigt eine Ansicht einer erfindungsgemäßen Fahrzeugtür in Fahrtrichtung eines Kraftfahrzeugs von hinten und darin die Position des Schnittes A-A, der in Fig. 2b dargestellt ist.

Wie in Fig. 2b dargestellt, ist die Innenschale 2 an der als Vierkantprofil ausgebildeten Tragstruktur 1 durch Kleben mittels eines elastischen Klebstoffes 4 befestigt, wobei die Befestigung indirekt mittels eines Verstärkungselements 5 erfolgt, das seinerseits mit der Innenschale 2 und mit der Tragstruktur 1 direkt verklebt ist.

Die Außenbeplankung 3 ist sowohl mit der Innenschale 2 als auch mit der Tragstruktur 1 und mit dem Verstärkungselement 5 mittels elastischem Klebstoff 4 direkt verklebt. Die Schichtdicke des Klebstoffes 4 liegt zwischen 2 mm und 5 mm um unterschiedliche Wärmeausdehnungen aufnehmen zu können. Ebenfalls an der Außenbeplankung 3 verklebt ist eine Fensterscheibe 8.

In Fig. 3b ist schließlich der in Fig. 3a markierte Schnittbereich B-B im Detail zu sehen.

Fig. 3b zeigt, wie auch Fig. 2b, dass die Außenbeplankung 3 mit der Innenschale 2 im Bereich ihrer jeweiligen äußeren Ränder miteinander rundum verklebt ist, so das keine weitere Abdichtung nach außen erforderlich ist.

In diesem radialen Endbereich von Außenbeplankung 3 und Innenschale 2 ist die Außenbeplankung 3 im Bereich ihres äußeren Randes rundum nach innen gebördelt, wobei diese Bördelung 7b durch das Verkleben der Außenbeplankung 3 mit der Innenschale 2 mittels Klebstoff 4 abgedichtet ist.

Knapp oberhalb dieser Abdichtung mittels Klebstoff 4 an der Unterkante der Innenschale 2 und des Außenbeplankungsteils 3 ist ein Kondenswasserablauf 10, realisiert durch mehrere Bohrungen, vorgesehen.

Das Außenbeplankungsteil 3 kann optional über ein weiteres Verstärkungsteil, nämlich die Abstützung 11 an der Tragstruktur 1 befestigt werden, wobei die Abstützung 11 sowohl zum Außenbeplankungsteil 3 hin, als auch zur Tragstruktur 1 hin, mittels Klebstoff 4 verklebt ist.

Die Blende 6 ist an der Innenschale 2 mittels einer Klettverbindung 12 lösbar befestigt.

### Bezugszeichenliste

- 1: Tragstruktur
- 2: Innenschale
- 3: Außenbeplankung
- 4: Klebstoff
- 5: Verstärkungselement
- 6: Blende
- 7a: Montageteile
- 7b: Bördelung
- 8: Scheibe
- 9: Reserveradträger
- 10: Kondenswasserablauf
- 11: Abstützung
- 12: Klettverbindung

## Patentansprüche

1. Fahrzeugtür für ein Kraftfahrzeug, umfassend eine Tragstruktur (1), wobei die Tragstruktur (1) einen Teil einer Space-Frame-Struktur der Fahrzeugtüre bildet, eine Innenschale (2) und eine Außenbeplankung (3), wobei die Innenschale (2) an der Tragstruktur (1) befestigt ist und die Außenbeplankung (3) an der Innenschale (2) befestigt ist, wobei die Innenschale (2) ein Kunststoffbauteil ist, wobei die Innenschale (2) derart ausgebildet und mit der Tragstruktur (1) verbunden ist, dass sie ein die Steifigkeit der Fahrzeugtüre erhöhendes, tragendes Bauteil ist, wobei die Innenschale (2) die von innen sichtbare Oberfläche der Fahrzeugtür ausbildet, wobei sich die Innenschale (2) im Wesentlichen über die gesamte Höhe und die gesamte Breite der Fahrzeugtür erstreckt, wobei die Außenbeplankung (3) mit der Innenschale (2) im Bereich ihrer jeweiligen äußeren Ränder miteinander verbunden ist, **dadurch gekennzeichnet, dass** die Außenbeplankung (3) mit der Innenschale (2) im Bereich ihrer jeweiligen äußeren Ränder miteinander rundum verklebt ist, so das keine weitere Abdichtung erforderlich ist.

2. Fahrzeugtür nach Anspruch 1,
**dadurch gekennzeichnet, dass** die Innenschale (2) ein thermogeformtes Kunststoffbauteil oder ein Spritzgussbauteil oder ein Pressteil ist.

3. Fahrzeugtür nach zumindest einem der vorhergehenden Ansprüche, **dadurch gekennzeichnet, dass** die Innenschale (2) an der Tragstruktur (1) durch Kleben mittels eines elastischen Klebstoffes (4) befestigt ist, wobei die Schichtdicke des Klebstoffes (4) bevorzugt zwischen 2 mm und 5 mm liegt.

4. Fahrzeugtür nach zumindest einem der vorhergehenden Ansprüche, **dadurch gekennzeichnet, dass** die Innenschale (2) die Innenausstattung der Fahrzeugtür ausbildet.

5. Fahrzeugtür nach zumindest einem der vorhergehenden Ansprüche, **dadurch gekennzeichnet, dass** zwischen Innenschale (2) und Tragstruktur (1) zumindest bereichsweise ein Verstärkungselement (5) angeordnet ist, dessen Oberfläche nicht durchgehend parallel zur Oberfläche der Innenschale (2) geformt ist.

6. Fahrzeugtür nach zumindest einem der vorhergehenden Ansprüche, **dadurch gekennzeichnet, dass** an der dem Fahrzeuginneren zugewandten Fläche der Innenschale (2) eine öffenbare oder lösbare Blende (6) angebracht ist, um einen Zugang zu einem Montageraum freizugeben.

7. Fahrzeugtür nach zumindest einem der vorhergehenden Ansprüche, **dadurch gekennzeichnet, dass** die Außenbeplankung (3) im Bereich ihres äußeren Randes rundum gebördelt ist, wobei die Bördelung (7b) vorzugsweise durch Verkleben der Außenbeplankung (3) mit der Innenschale (2) abgedichtet wird.

## Claims

1. Vehicle door for a motor vehicle, comprising a support structure (1), wherein the support structure (1) forms part of a space-frame structure of the vehicle door, an inner shell (2) and an outer panelling (3), wherein the inner shell (2) is fixed to the support structure (1) and the outer panelling (3) is fixed to the inner shell (2), wherein the inner shell (2) is a plastic component, wherein the inner shell (2) is formed and connected to the support structure (1) in such a way that it is a load-bearing component increasing the rigidity of the vehicle door, wherein the inner shell (2) forms that surface of the vehicle door which is visible from inside, wherein the inner shell (2) extends substantially over the entire height and the entire width of the vehicle door, wherein the outer panelling (3) is connected to the inner shell (2) in the region of the respective outer edges thereof, **characterized in that** the outer panelling (3) is adhesively bonded all around to the inner shell (2) in the region of the respective outer edges thereof, with the result that no further sealing is necessary.

2. Vehicle door according to Claim 1,
**characterized in that** the inner shell (2) is a thermoformed plastic component or an injection-moulded component or a compression-moulded part.

3. Vehicle door according to at least either of the preceding claims,
**characterized in that** the inner shell (2) is fixed to the support structure (1) by adhesive bonding by means of an elastic adhesive (4), wherein the layer thickness of the adhesive (4) is preferably between 2 mm and 5 mm.

4. Vehicle door according to at least one of the preceding claims,
**characterized in that** the inner shell (2) forms the interior trim of the vehicle door.

5. Vehicle door according to at least one of the preceding claims,
**characterized in that** a reinforcing element (5), the surface of which is formed not continuously parallel to the surface of the inner shell (2), is arranged at least in certain regions between the inner shell (2) and the support structure (1).

6. Vehicle door according to at least one of the preceding claims,
**characterized in that** an openable or detachable screen (6) is fitted to that face of the inner shell (2) which faces the vehicle interior, in order to open up access to an installation space.

7. Vehicle door according to at least one of the preceding claims,
**characterized in that** the outer panelling (3) is flanged all around in the region of its outer edge, wherein the flanging (7b) is preferably sealed by adhesively bonding the outer panelling (3) to the inner shell (2).

## Revendications

1. Porte de véhicule pour un véhicule automobile, comprenant une structure porteuse (1), la structure porteuse (1) formant une partie d'une structure espace-cadre des portes du véhicule, une coque intérieure (2) et un parement extérieur (3), la coque intérieure (2) étant fixée à la structure porteuse (1) et le parement extérieur (3) étant fixé à la coque intérieure (2), la coque intérieure (2) étant un composant en plastique, la coque intérieure (2) étant réalisée et étant connectée à la structure porteuse (1) de telle sorte qu'elle constitue un composant porteur augmentant la rigidité des portes du véhicule, la coque intérieure (2) constituant la surface visible depuis l'intérieur de la porte du véhicule, la coque intérieure (2) s'étendant essentiellement sur toute la hauteur et toute la largeur de la porte du véhicule, le parement extérieur (3) étant connecté à la coque intérieure (2) dans la région de leurs bords extérieurs respectifs, **caractérisée en ce que** le parement extérieur (3) est collé sur le pourtour à la coque intérieure (2) dans la région de leurs bords extérieurs respectifs de telle sorte qu'aucun joint d'étanchéité supplémentaire ne soit nécessaire.

2. Porte de véhicule selon la revendication 1, **caractérisée en ce que** la coque intérieure (2) est un composant en plastique thermoformé ou un composant moulé par injection ou une pièce moulée par compression.

3. Porte de véhicule selon au moins l'une quelconque des revendications précédentes,
**caractérisée en ce que** la coque intérieure (2) est fixée à la structure porteuse (1) par collage au moyen d'un adhésif élastique (4), l'épaisseur de couche de l'adhésif (4) étant de préférence comprise entre 2 mm et 5 mm.

4. Porte de véhicule selon au moins l'une des revendications précédentes,
**caractérisée en ce que** la coque intérieure (2) constitue l'équipement intérieur de la porte de véhicule.

5. Porte de véhicule selon au moins l'une des revendications précédentes,
**caractérisée en ce qu'**entre la coque intérieure (2) et la structure porteuse (1) est disposé au moins en partie un élément de renforcement (5) dont la surface n'est pas formée de manière continue parallèlement à la surface de la coque intérieure (2).

6. Porte de véhicule selon au moins l'une des revendications précédentes, **caractérisée en ce qu'**un bandeau (6) pouvant être ouvert ou enlevé est monté au niveau de la surface de la coque intérieure (2) tournée vers l'intérieur du véhicule, afin de permettre un accès à un espace de montage.

7. Porte de véhicule selon au moins l'une des revendications précédentes, **caractérisée en ce que** le parement extérieur (3) dans la région de son bord extérieur est bordé sur tout le pourtour, le bordage (7b) étant de préférence étanchéifié par collage du parement extérieur (3) avec la coque intérieure (2).
